# EUROPEAN PATENT APPLICATION

(11) **EP 2 412 576 A2**
(43) Date of publication of application: **01.02.2012**
(21) Application number: 11175885.0
(22) Date of filing: 28.07.2011
(51) Int. Cl.: B60Q 3/02

(54) **Emergency egress lighting system**

(30) Priority: 30.07.2010 US 369400 P; 22.07.2011 US 201113188776
(71) Applicant: BAE Systems Land & Armaments L P., Santa Clara CA 95050 (US)
(72) Inventor: Sheffer, Eric R., Santa Clara, 95050 (US); Green, Jon M., Santa Clara, 95050 (US); Smith, Jason T., Santa Clara, 95050 (US); Dannan, Benjamin R., Santa Clara, 95050 (US); Stone, Justin L., Santa Clara, 95050 (US)
(74) Representative: Cabinet Plasseraud

(57) **Abstract**

An emergency egress lighting system for a vehicle having multiple egress portals, including first sensors and second sensors that sense information as to vehicle orientation in pitch and roll. A plurality of indicators is changeable between a positive indication and a negative indication locatable inside the vehicle near one of the multiple egress portals. The plurality of indicators display a positive indication and a negative indication at each of the multiple egress portals based on the vehicle orientation in pitch and roll such that a first portion of the plurality of indicators displays the positive indication proximate least one first selected egress portal that is less or least likely to be blocked to prevent egress while a second portion of the of the plurality of indicators display the negative indication proximate at least one second selected egress portals that is more or most likely to be blocked to prevent egress.

## Description

### CLAIM TO PRIORITY

This application claims priority to United States Provisional Application 61/369,400 filed July 30, 2010 entitled "Emergency Egress Lighting System" the entire contents of which are incorporated herein by reference.

### FIELD OF THE INVENTION

The present invention relates to vehicle safety, more specifically to systems, devices and methods of providing cues to assist vehicle occupants in safely and quickly exiting a vehicle in the event of a catastrophic event.

### BACKGROUND OF THE INVENTION

Vehicles, especially military vehicles are sometimes subject to vehicle rollover, submersion, or an explosion near the vehicle. Under these circumstances it is not unusual for the vehicle to come to rest in an orientation other than the orientation in which the vehicle normally travels. These events can be disorienting to the occupants of the vehicle and occupants may expend valuable time attempting to exit the vehicle via an exit point that is blocked by the fact that the exit point may now be in contact with the ground and therefore inoperable for egress. These events may be accompanied by smoke, fire, dust and the dislodging of the vehicle contents from normal locations. This can lead to obscuration of normal cues that the occupants of the vehicle use to identify exit points as well as obscuration of operating controls for doors and hatches. It is not uncommon for normal internal vehicle lighting to be rendered inoperable in the event of a rollover. Darkness may add to the sense of disorientation for occupants suffering the effects of the vehicle coming to rest in a position not normal for the vehicle. In addition, occupants of military vehicles often have and have been trained to use night vision goggles (NVG). While night vision goggles assist in low light situations some are designed to automatically deactivate in the presence of white light. Night vision goggles also alter color sensitivity and color perception.

Vehicle occupants, after a catastrophic event such as vehicle rollover, submersion, or an explosion near the vehicle, can benefit from additional visual aids and cues to safely egress a damaged vehicle. Due to obscuration of exit points and associated operating mechanisms (e.g. handles, latches or pull chains) by smoke, flame, dislodged objects, debris, low ambient light levels, as well as potential 'sensory disorienting' effects of the event, time can be lost by vehicle occupants attempting to locate an operable exit and egress the vehicle. The need to rapidly exit a vehicle subject to the above discussed catastrophic events is particularly relevant to situations where troops are operating a combat vehicle in battlefield conditions.

Current measures to mark vehicle exits commonly utilize a reflective honeycomb tape as partial solution to highlighting vehicle egress points. Another existing product, the HALO system produced by the QinetiQ Group, marks vehicle egress points with white light if the vehicle becomes submerged. The HALO approach however utilizes white light that is not Night Vision Goggle compatible and can cause a temporary loss of vision due to the automatic shutdown feature of GEN III night vision devices when exposed to this light. The use of NVGs is a very common tactical scenario in combat environments since many operational movements take place at night. The HALO system also uses a moisture sensor that is prone to false activation (false-positives) in a high humidity environment, such as heavy rain. This can lead to an indication of submersion of the vehicle that is false.

### SUMMARY OF THE INVENTION

Embodiments of the present invention are directed toward an Emergency Egress Lighting System (EELS) that provides a compact, robust, and self-contained lighting system that can automatically activate illumination to aid the occupants in exiting a vehicle. An example embodiment of the system activates if any one or more of a variety of trigger events takes place, such as vehicle rollover, vehicle submersion, or if the vehicle absorbs a shock or pressure wave associated with an Improvised Explosive Device (IED) or other explosive detonation. The EELS automatically illuminates the vehicle interior space with a series of color coded LED arrays. The LED arrays are strategically placed to frame or highlight all egress points; as well as to mark necessary handholds, latches, or pull handles required for door or hatch activation.

In one example embodiment, The EELS sensor module includes logic architecture that enables the system to perform 'vehicle orientation discrimination' (VOD). VOD identifies which egress plane (or surface of the vehicle) is positioned on the ground after a rollover event based on measured pitch angle, roll angle and gyroscopic data. The VOD system can include a combination of sensors that determine the final resting orientation of the vehicle and a visually designates a suggested egress route or portal based on the final orientation of the vehicle. Based on acquired data the system can activate appropriate LED lights to indicate, for example by color coding, any egress points which are potentially blocked based on the vehicles final resting orientation, while marking by different color coding or illuminating the remaining unobstructed egress points. A rollover condition along any vehicle axis can activate the VOD logic. Vehicle exits that are not blocked can be illuminated with green LEDs and exits which are potentially blocked (typically by the ground) can be illuminated with an amber colored light or another appropriate distinguishing color. VOD in combination with the color-coded lighting assists the vehicle operator or passengers in quickly determining the vehicle orientation and prioritizing an exit strategy. Alternative embodiments optionally include audible indications to vehicle occupants as to the location of potentially blocked or operable egress locations.

In one example embodiment, the EELS system activates both visual and audible cues for the driver if the vehicle approaches its mobility limits. All measureable system limits and thresholds are configurable to support integration on virtually any vehicle platform. System limits and thresholds can include such elements as vehicle pitch or roll, and can dynamically adjust the warning limits to the operator based on the vehicle's speed, or rate of assent or descent along a trajectory.

In one example embodiment, if a trigger event is detected, the system's self-contained pre-charged battery pack provides power required for sustained system operation for approximately 45 minutes. In one embodiment a battery pack can include lithium ion (LI-ion) batteries. The integrated battery backup capability can enable an EELS system to function, after a catastrophic event where the vehicle loses its battery system or electrical power generation capability. The EELS system can remain in a 'standby mode' during normal vehicle operation while simultaneously charging or recharging the battery pack from the vehicle electrical system.

In one embodiment, the invention marks vehicle egress points using a combination of green and/or amber wavelength light which are NVG compatible, in the event a vehicle rolls over or becomes submerged while the vehicle occupants are wearing NVG devices or if the occupants don night vision goggles as a result of a loss of normal lighting. Additionally, the EELS system activates and marks egress points if the system senses an explosive force (acceleration) experienced by the vehicle in any of three independent axes.

In another example embodiment, the EELS design also includes data recording/logging capability that captures all sensor data during and immediately after a catastrophic event. This enables data recovery and event reconstruction. This "black box' data capture approach can provide valuable measurement data that can aid vehicle engineers in designing better survivability solutions and platform upgrades. Additionally, this data can include valuable field intelligence that, once correlated with additional event data such as; vehicle damage, occupant injuries and enemy techniques, tactics and practices (TTPS) can then be used to make timely and accurate battlefield decisions and potentially save lives. From a medical perspective, the data enable medical personnel to determine the level of exposure the vehicle occupants have had to extreme accelerations and pressures (e.g. head trauma) and conduct appropriate care for, for example, traumatic brain injury.

In one example embodiment, the invention can include additional input and output (I/O) signal capability which provides integrated communication and mutual activation between the EELS system and other existing or future vehicle systems. The invention offers significant flexibility by supporting both current and future vehicle platform auxiliary systems, either in a stand alone or networked environment to increase occupant survivability rates.

### BRIEF DESCRIPTION OF THE DRAWINGS

The invention may be more completely understood in consideration of the following detailed description of various embodiments of the invention in connection with the accompanying drawings, in which:
Fig. 1 is a block diagram depicting system interconnections according to an example embodiment of the invention.
Fig. 2 is a block diagram depicting the power input switching according to an example embodiment of the invention.
Fig. 3 is a block diagram depicting a system control scheme according to an example embodiment of the invention.
Fig. 4 is a block diagram depicting a LED control scheme according to an example embodiment of the invention.
Fig. 5 is a block diagram depicting a sensor module enclosure and interfaces according to an example embodiment of the invention.
Fig. 6 is a depiction of a pitch or roll sensor according to an example embodiment of the invention.
Fig. 7 is a depiction of a three-dimension G-force acceleration sensor according to an example embodiment of the invention.
Fig. 8 is a block diagram depicting sensor module interconnections according to an example embodiment of the invention.
Fig. 9 is a schematic diagram depicting an interconnection diagram according to an example embodiment of the invention.
Fig. 10 is a block diagram depicting a sensor module system diagram according to an example embodiment of the invention.
Fig. 11 is a depiction of a vehicle driver's side door illumination in green light from right rear-passenger perspective according to an example embodiment of the invention.
Fig. 12 is a depiction of a vehicle driver's side door illumination in green light and the commander's (passenger) side door without illumination according to an example embodiment of the invention.
Fig. 13 is a depiction of a crew exit door illuminated in green according to an example embodiment of the invention.
Fig. 14 depicts a crew exit door illuminated in amber and roof hatches illuminated in green according to an example embodiment of the invention.
Fig. 15 depicts various LED arrays marking exit hatch handles for a M1114 vehicle according to an example embodiment of the invention.
Fig. 16 depicts LED arrays marking a left edge of a rear access and Driver's door handle and locking pin according to an example embodiment of the invention.

While the invention is amenable to various modifications and alternative forms, specifics thereof have been shown by way of example in the drawings and will be described in detail. It should be understood, however, that the intention is not to limit the invention to the particular embodiments described. On the contrary, the intention is to cover all modifications, equivalents, and alternatives.

### DETAILED DESCRIPTION

While this invention may be embodied in many different forms, there are described in detail herein specific preferred embodiments of the invention. This description is an exemplification of the principles of the invention and is not intended to limit the invention to the particular embodiments illustrated.

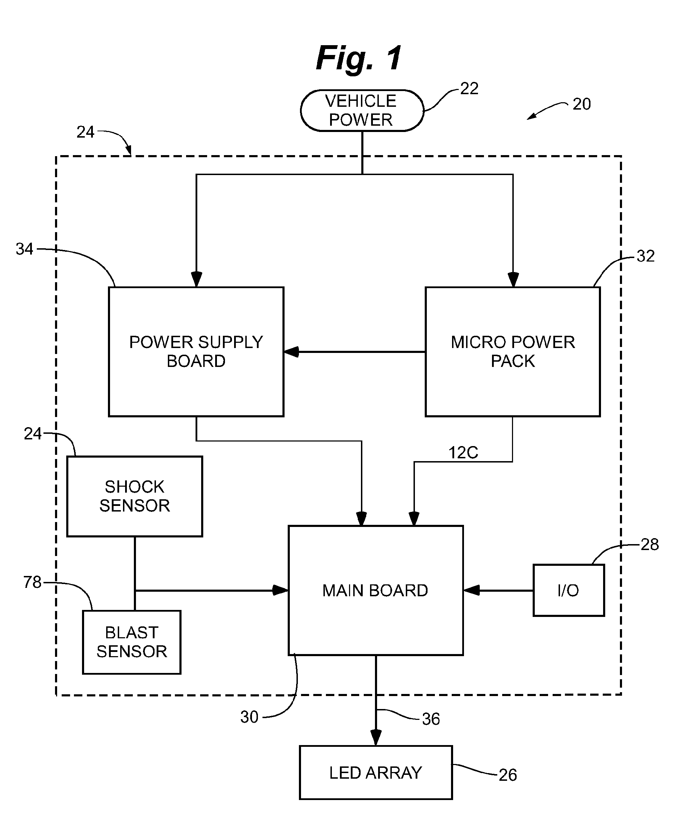

Fig. 1 depicts an example embodiment of an emergency egress lighting system 20 that includes three basic subsystems. The subsystems generally include vehicle power supply 22, sensor module 24 and LED array 26.

Sensor module 24 includes sensors 26, I/O switches 28, hardware and processor logic 30, battery power pack 32 and power supply board 34. I/O switches 28 are positioned for operator interaction. Hardware and processor logic 30 is adapted to monitor and activate system function if a trigger event is detected. Battery power pack 32 is configured for backup energy storage in the event of a loss of vehicle power supply 22.

LED arrays 26 subsystem includes numerous sets of lights or LEDs located or locatable adjacent to exit portals of an equipped vehicle. A suitable LED array 26 is LightForm™ LED strips manufactured by Grote Industries, Inc. of Madison, Indiana. LED arrays can be equipped with mounting aids such as hook-and-loop or adhesive mounting provisions. When in use sub parts of LED arrays 22 are located to provide emergency illumination at egress points and associated handles and latches for unlatching and opening of portals of a vehicle. LED arrays can take the form of LED strips and can also provide driver-warning indications. In an example embodiment, LED arrays 26 are adapted to be daylight readable and night vision goggle (NVG) compliant.

Interconnect subsystem 36 includes low profile, lightweight cable or harness that provides electrical connectivity between the Sensor Module subsystem 10 and the LED Array subsystem 22.

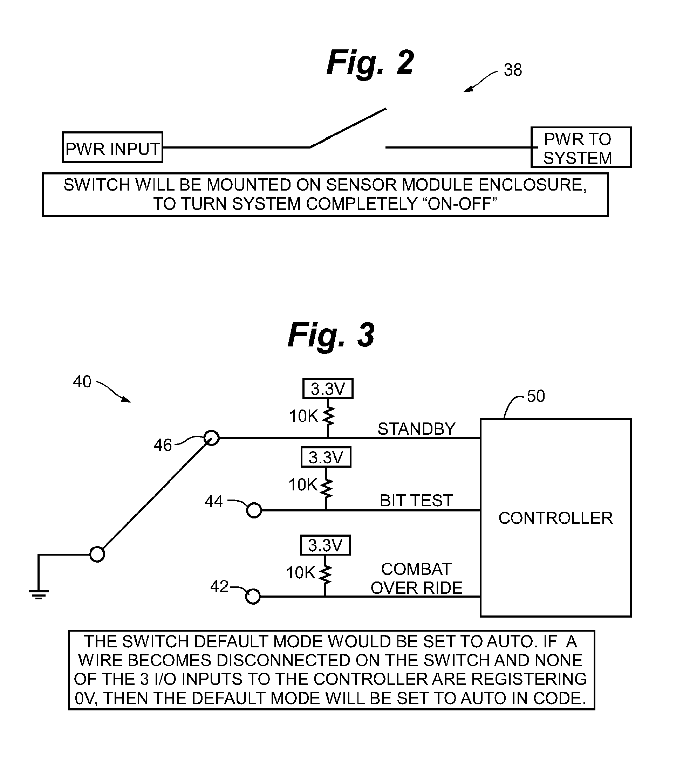

Figs. 2 and 3 depict example I/O switches 28 that are located within a vehicle for user operation. Fig. 2 depicts two-position locking switch 38 that can be used to fully disengage electrical power for maintenance or based on user necessity.

Fig. 3 depicts three-position locking toggle switch 40 that can be utilized to control a powered system. First position 42 enables a combat over ride mode that can be pre-configured to disable all illumination or only activate LED arrays 26 in specific scenarios. Second position 44 activates a system-test mode that can be used to diagnose system errors or alternatively, illuminate all LEDs continuously or in sequence to facilitate, for example, replacement of individual lighting units. Third default position 46 enables normal, or automatic, system operation as discussed herein.

Once installed in a vehicle, EELS 20 can remain in an automatic or 'standby mode' during normal vehicle operation and battery power pack 32 is under a constant electrical charge via the vehicle electrical system. In the event of a loss of vehicle power supply 22, the EELS 20 self-contained battery power pack 32 provides all electrical power required for sustained EELS 20 operation for up to 45 minutes after any potential loss of vehicle power supply 22.

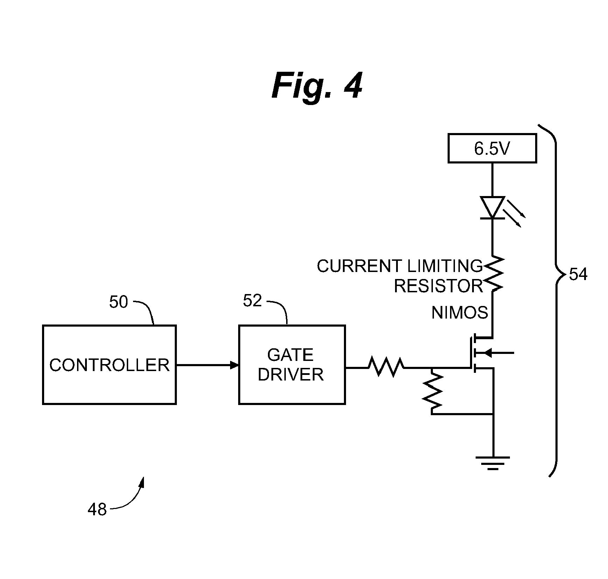

Fig. 4 depicts an example LED control scheme 48, that includes controller 50 coupled to gate driver 52 to switch individual LED array 26 units on or off at the direction of controller 50. Separate gate drivers 52 can be utilized for different color LED arrays 26. Alternatively dual-output gate drivers (not shown) can be configured to operate LED arrays 26 equipped with multicolor LED arrays 26. LED control scheme 48 also includes other circuit components 54 as known to those of skill in the art.

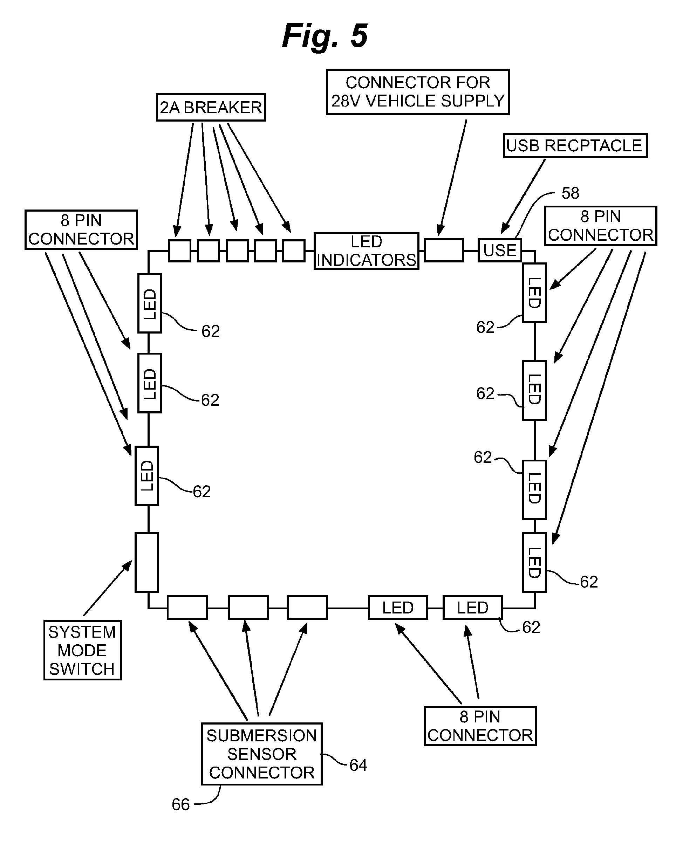

Referring to Fig. 5, sensor module enclosure 56 includes various interfaces in one embodiment of a scalable EELS system architecture. Ports and connectors provide a variety of interfaces to enclosure 50. These ports can include USB receptacle 58, I2C port 60, power ports for vehicle power supply 22, LED output connectors 62, and various sensor 64 inputs including submersion sensor connector 66. The depicted enclosure 56 provides for the selection of various sensors 64, tailoring the EELS system to specific vehicle types or theatre of operations. Sensor 64 options include, but are not limited to pitch sensor 68, roll sensor 70, micro electrical mechanical system (MEMS) gyroscopic sensor 72, accelerometer 74, submersion sensor 76 and pressure wave (Blast) sensor 78. The EELS 20 is software configurable, allowing activation thresholds including, but not limited to, max pitch angle, max roll angle and acceleration rates. These rates and limits can be configured based on vehicle type (size and/or weight) and mobility specifications.

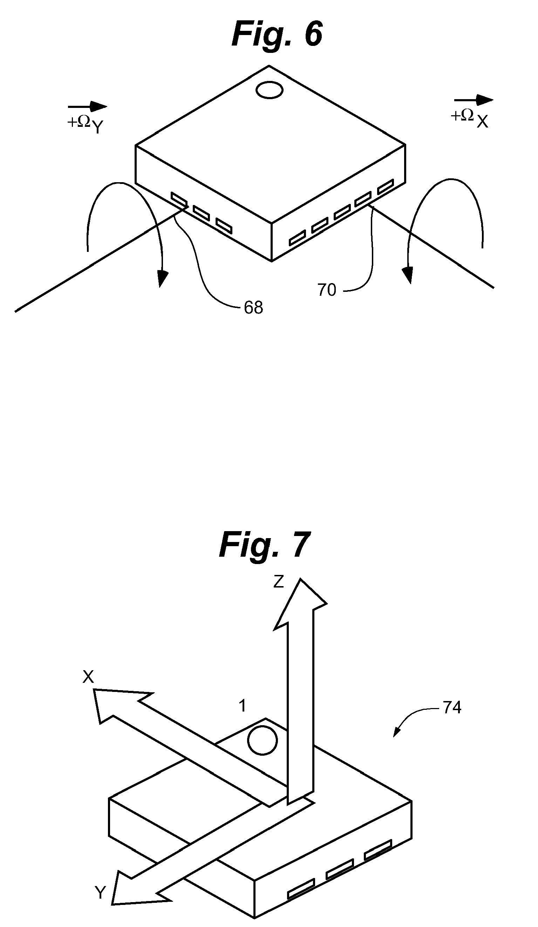

Figs. 6 and 7 depict two sensors that can be included with EELS 20. Fig. 6 depicts pitch sensor 68 and roll sensor 70. Combination pitch sensor 68 and roll sensor 70 converts analog rotation of a vehicle along the X or Y axes into a digital signal that can be analyzed by controller 50. Rotation about the Z-axis is not depicted in this embodiment, as the changing orientation of a vehicle at normal rates during normal operation is typically not indicative of a critical event. In an alternative embodiment Z-axis rotation of the vehicle can be collected, particularly when it occurs above a threshold rate and utilized in conjunction with the X-axis and Y-axis data.

Fig. 7 depicts three-axis accelerometer 74. Three-axis accelerometer 74, alone, or in combination with other orientation sensors can be utilized to input vehicle movements to controller 50. When controller 50 receives one or more indications from any of sensors 64 EELS 20 can identify which side of the vehicle is positioned on the ground after a rollover event based on measured pitch angle, roll angle and gyroscopic data. An embodiment of the system can perform real-time event data recording, allowing an operator to download all of sensor measurement data after an event for analysis, recreation, and intelligence gathering.

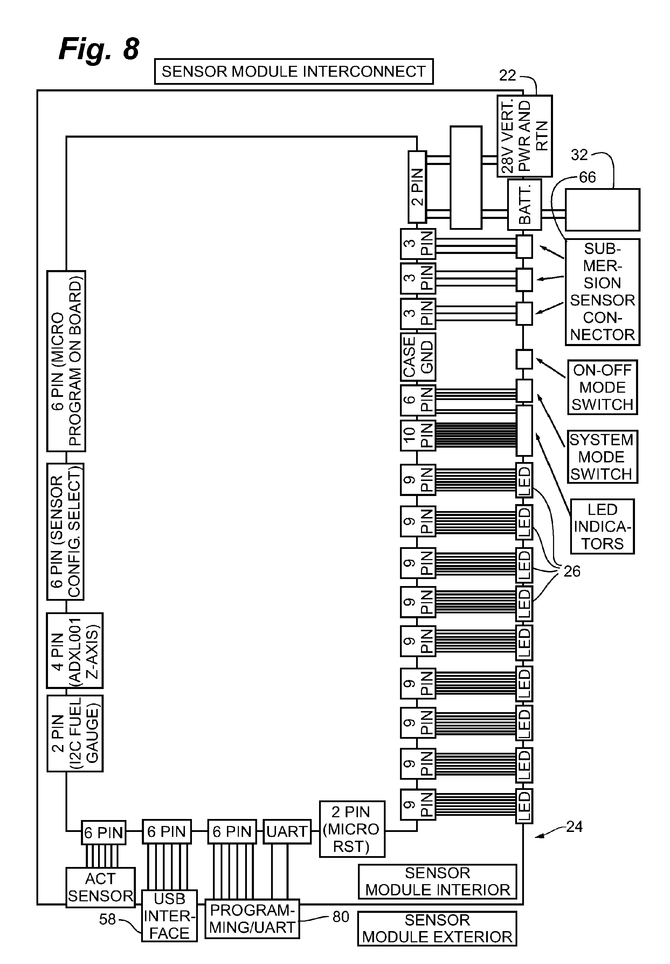

Fig. 8 depicts an emergency egress lighting system 20 sensor module 24 with external input and output (I/O) signal capability, including integrated communication and mutual activation between the EELS system and other existing or future vehicle systems. In the depicted embodiment, both a USB port 58 and a programmable UART 80 are provided. Alternative wired or wireless interfaces (not shown) can also optionally be included with the system.

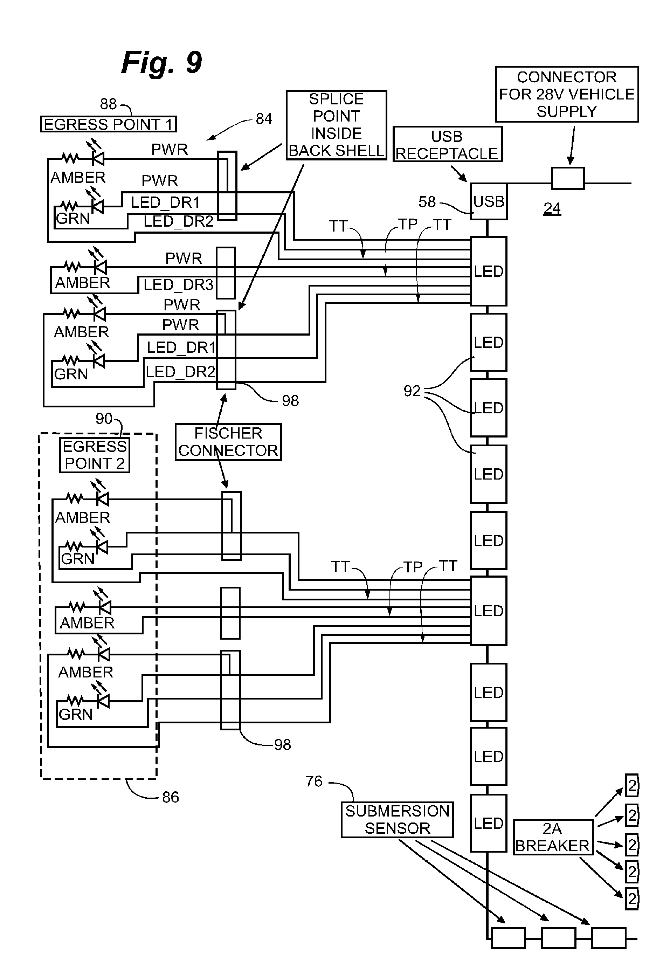

Fig. 9 depicts an embodiment of a sensor module 24 with multiple LED interconnections 82, as well as submersion sensor connections 66. Also depicted are two egress point LED arrays first egress point LED array 84 and second egress point LED array 86 located at first egress point 88 and second egress point 90. First egress point LED array 96 includes, for example five individual colored light emitting diodes 92 including two green LEDs 94 and three amber LEDS 96. In an alternate embodiment, separate green LED 94 and amber LED 96 arrays can be utilized, however, including multiple colors of LEDs 92 in a single LED array 26 can minimize the space required and installation time for the plurality LED arrays 26 that may be needed for an individual vehicle. Connectors 98 are disposed between sensor module 24 and first egress LED array 84 and second egress LED array 96. The connectors 98 provide electrical signals to the LED arrays 94, 96 and allow for individual LED arrays 26 to be replaced as needed due to failure or damage. While any of a variety of releasable or locking connectors 98 can be utilized in various embodiments of the invention, one potential supplier of military grade connectors 98 is Fischer Connections SA.

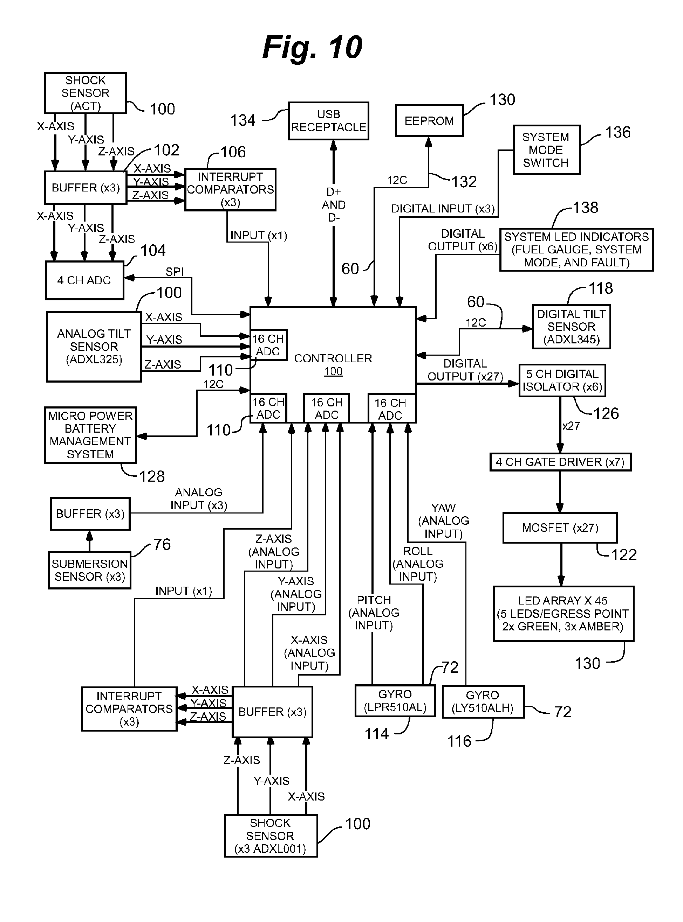

Fig. 10 depicts an example embodiment of an EELS controller 50 interconnected with various system devices. Three-axis shock sensor 100 is coupled via a buffer 102 to controller 50 to provide X, Y, and Z-axes data through analog to digital converter 104 coupled to a serial peripheral interface (not shown) of controller 50. Associated X, Y and Z interrupt data can be indicated through at least one connection between controller 50 and an interrupt comparator 106.

Analog tilt sensor 108 is coupled to controller 50, for example, via a sixteen-channel ADC port 110 of the controller 50 to provide X, Y, and Z-axis data. A depicted example analog tile sensor 108 is an ADXL325 sensor, available from Analog Devices, Inc., is a small, low power, 3-axis accelerometer with signal conditioned voltage outputs. The sensor can measure acceleration with a minimum full-scale range of ±5 g. It can measure the static acceleration of gravity in tilt-sensing applications, as well as dynamic acceleration, resulting from motion, shock, or vibration.

Any number individual submersion sensors 76 can be located on various portions of a vehicle to detect partial submersion of one section or side of the vehicle. In the depicted embodiment three submersion sensors 76 are buffered into 16-channel ADC port 110 of controller 50.

One exemplary shock sensor 100 is the ADXL001 accelerometer, available from Analog Devices, Inc., that can provide g-force data along the axis of the sensors orientation. Three depicted shock sensors 100 can be oriented such that each sensor detects acceleration in one of the three separate X, Y, and Z-axes. Shock sensor 100 can be coupled to controller 50 via a buffer that provides analog data from each axis of movement as well as an interrupt comparator that can provide a signal to the controller 100 indicating that sensor data is available.

An example first gyroscope 114 is a STMicroelectronics LPR510AL dual-axis gyro, which can measure the angular rates of rotation about the pitch (X) and roll (Y) axes. Two separate analog voltage outputs for each axis can provide angular velocity ranges to controller 50. Vehicle yaw, or orientation, can be measured with example second gyroscope 116, which can include the LY510ALH single axis gyroscope, also available from STMicroelectronics. Both first gyroscope 114 and second gyroscope 116 can be coupled to a sixteen-channel ADC port 110 of controller 50.

In addition to analog tilt sensor 108, digital tilt sensor 118 can also be coupled to controller 50 via a 12C bus 120. One example digital tilt sensor is an ADXL345 sensor which includes a small, thin, low power, 3-axis accelerometer with high-resolution (13-bit) measurement at ±16 g.

A plurality of LED arrays 26 include multiple LEDs of various colors and be coupled to controller 50 via a system of MOSFETs 122, gate drivers 124 and digital isolators 126. As understood by those skilled in the art, other lighting configurations can alternatively be utilized.

Additional connections to controller 50 include: a backup battery management system 128 coupled to battery power pack 32 and electrically erasable programmable read only memory 130 (EEPROM) coupled to controller 50 via 12C bus 132, a USB receptacle 134, system switches 136 and system status indicators 138 such as fuel status, system mode, and fault indicators.

An embodiment of an emergency egress lighting system 20 can be provided as a kit (not shown) in a small, robust and self-contained package including sensor module 24, battery power pack 32, interconnect subsystem 36, and set of LED arrays 26 that can be removably mounted to an existing vehicle interior. The assembled kit (not shown) can automatically activate color coded LED arrays, providing visual cues to occupants, aiding in their egress of the vehicle.

Moisture sensors 140 can also be located external to the vehicle to provide sensing of the presence of water such as when the vehicle becomes submerged or partially submerged. Controller 50 is operably coupled to moisture sensors 140 and is programmed to determine which of first egress point 88 and second egress point are not submerged and to illuminate first egress LED array 84 or second egress LED array 86 to indicate a preferable exit.

In operation, EELS 20 can automatically activate when any one of the following configurable trigger events takes place:
1. The vehicle absorbs an excessive shock and/or pressure wave indicating an explosive event or other catastrophic high-acceleration scenario has occurred.
2. The vehicle exceeds its maximum mobility specification for pitch or roll.
3. The vehicle becomes completely or partially submerged.

In the presence of any one of these measured 'trigger' events, EELS 20 automatically illuminates the vehicle interior space with a series of LED arrays 26. Trigger points are software configurable and can be adjusted to coincide with particular vehicle platform specifications. In one embodiment the system can illuminate nine independent egress points 88, 98.

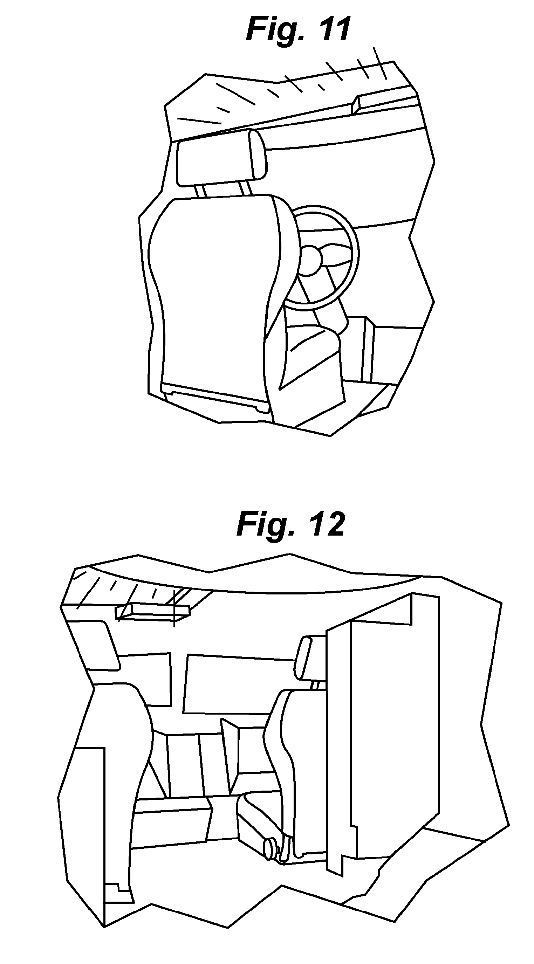

Fig. 11 depicts an example vehicle driver's side door illumination in green light from right rear-passenger perspective. Fig. 12 depicts an example vehicle driver's side door illumination in green light and in comparison the commander's (passenger) side door is not illuminated. This lighting scenario can indicate to the vehicle occupants that egress is likely available through the driver's side of the vehicle.

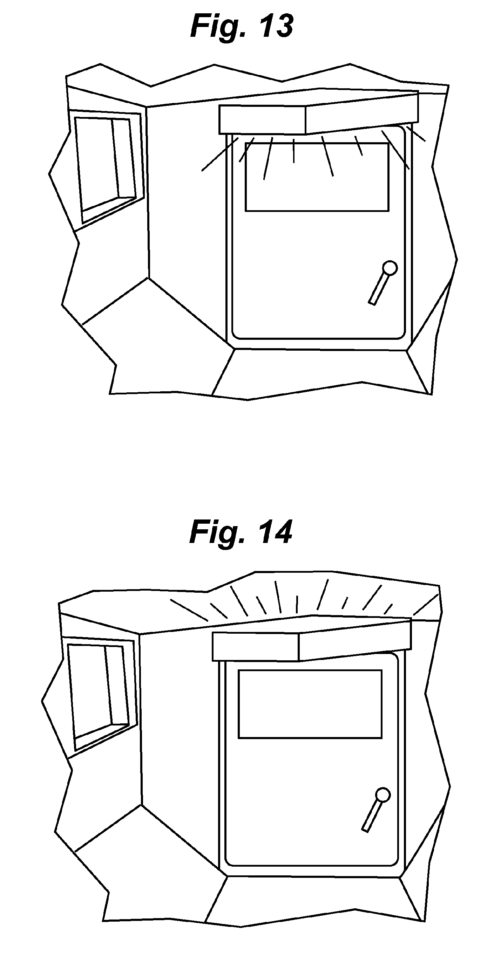

Fig. 13 depicts a crew exit door illuminated in green, indicating that the exit is likely operable. Alternatively, Fig. 14 depicts a crew exit door illuminated in amber and roof hatches illuminated in green. This scenario indicates that the vehicle has exceeded its climb angle, or that the vehicle has come to rest on its backside, preventing or hindering the use of the rear hatch exit. An alternative escape route is indicated at the roof hatches that are illuminated in green.

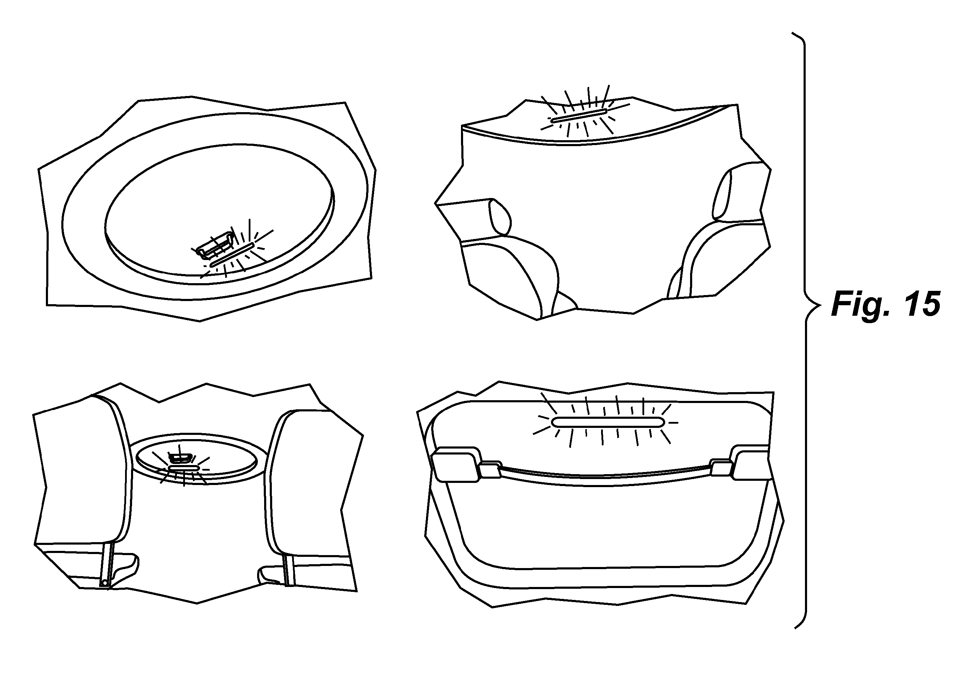

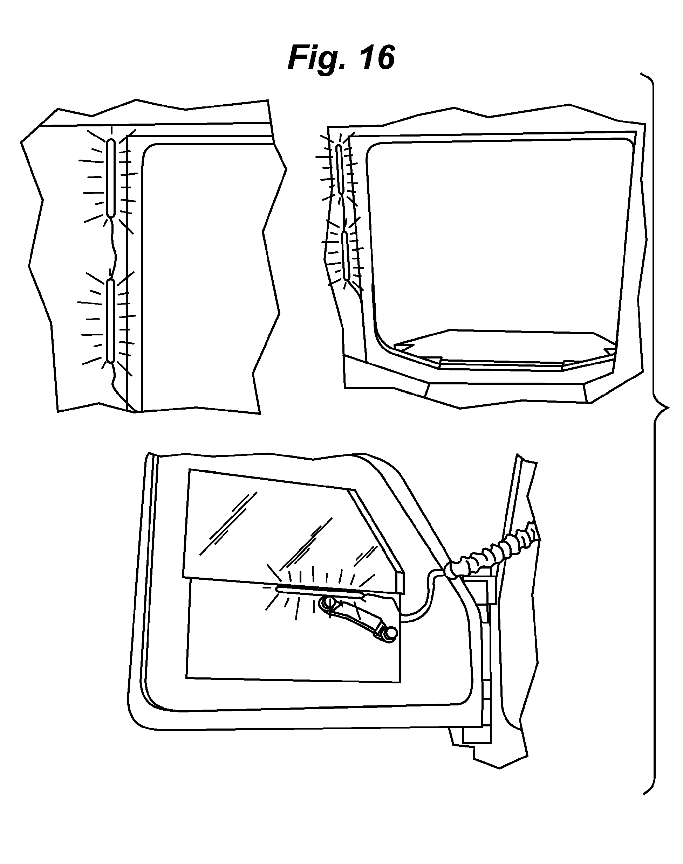

Fig. 15 depicts various LED arrays marking exit hatch handles for a M1114 vehicle. Fig. 16 depicts LED arrays making left edge of rear access and Driver's door handle and locking pin. These LED arrays can help to highlight and indicate the location of various handles and mechanisms in a vehicle after a catastrophic event. By providing visual indications of the locations of the exit points, and their respective operating mechanisms, the time required for occupants of a vehicle to egress the vehicle can be reduced.

In Figs. 15-16, the LED arrays generate illumination in a green color indicating that the depicted exits should be usable.

The embodiments above are intended to be illustrative and not limiting. Additional embodiments are encompassed within the scope of the claims. Although the present invention has been described with reference to particular embodiments, those skilled in the art will recognize that changes may be made in form and detail without departing from the spirit and scope of the invention.

## Claims

1. An emergency egress lighting system (20) for a vehicle having multiple egress portals (88, 90), comprising:
first sensors (72, 74, 78) that detect at least one of a shock exceeding a first preselected limit, a pressure wave exceeding a second preselected limit and a high acceleration exceeding a third preselected limit;
second sensors (68, 70) that sense vehicle orientation in pitch and roll;
a plurality of indicators (84, 86), each indicator being changeable between a positive indication and a negative indication discernable by occupants of the vehicle, each indicator (84, 86) being locatable inside the vehicle near one of the multiple egress portals (88, 90); and
a controller (50) operably coupled to and receiving input from the first sensors (72, 74, 78) and the second sensors (68, 70) and operably coupled to and controlling the plurality of indicators (84, 86) to display the positive indication and the negative indication at each of the multiple egress portals (88, 90) based on the vehicle orientation in pitch and roll such that a first portion of the plurality of indicators (84, 86) displays the positive indication proximate least one first selected egress portal (88) that is less or least likely to be blocked to prevent egress while a second portion of the of the plurality of indicators display the negative indication proximate at least one second selected egress portals (90) that is more or most likely to be blocked to prevent egress after receiving input from the first sensors (72, 74, 78) or the second sensors (68, 70) that at least one of the first preselected limit, the second preselected limit, the third preselected limit and a third preselected limit in at least one of pitch and roll has been exceeded.

2. The emergency egress lighting system as claimed in claim 1, the controller (50) further comprising vehicle orientation discrimination logic that identifies which exterior vehicle surface is positioned against the ground following a rollover event.

3. The emergency egress lighting system as claimed in claim 1, wherein the indicators (84, 86) further comprise visual indicators (92, 94, 96) that are visible to the occupants of the vehicle.

4. The emergency egress lighting system as claimed in claim 3, wherein the visual indicators further comprise color coded LEDs (94, 96).

5. The emergency egress lighting system as claimed in claim 3, wherein the color coded LEDs (94, 96).further comprise green LEDs (94) and amber LEDs (96) that are night vision goggle compliant.

6. The emergency egress lighting system as claimed in claim 1, wherein the indicators further comprise auditory indicators that are heard by the occupants of the vehicle.

7. The emergency egress lighting system as claimed in claim 1, further comprising submersion sensors (76) located external to the vehicle and operably coupled to the controller (50), wherein the controller (50) is programmed to display the positive indication proximate least one third selected egress portal (88, 90) that is less or least likely to be submerged and the negative indication proximate at least one fourth selected egress portal (88, 90) that is more or most likely to be submerged.

8. A method of assisting emergency egress from a vehicle having multiple egress portals, comprising:
equipping the vehicle with first sensors (72, 74, 78) that detect at least one of a shock exceeding a first preselected limit, a pressure wave exceeding a second preselected limit and a high acceleration exceeding a third preselected limit and second sensors (68, 70) that sense information as to vehicle orientation in pitch and roll;
equipping the vehicle with a plurality of indicators (84, 86) that is changeable between a positive indication and a negative indication discernable by occupants of the vehicle, each indicator (84, 86) being located inside the vehicle near one of the multiple egress portals;
operably coupling a controller (50) to receive input from the first sensors (72, 74, 78) and the second sensors (68, 70);
operably coupling the controller (50) to the plurality of indicators (84, 86) to display the positive indication and the negative indication at each of the multiple egress portals (88, 90) based on the vehicle orientation in pitch and roll such that a first portion of the plurality of indicators (84, 86) display the positive indication proximate least one first selected egress portal (88) that is less or least likely to be blocked to prevent egress while a second portion of the of the plurality of indicators display the negative indication proximate at least one second selected egress portals (90) that is more or most likely to be blocked to prevent egress after receiving input from the first sensors (72, 74, 78) or the second sensors (68, 70) that at least one of the first preselected limit, the second preselected limit, the third preselected limit and a fourth preselected limit in at least one of pitch and roll has been exceeded.

9. The method as claimed in claim 8, further comprising using vehicle orientation discrimination logic that identifies which exterior vehicle surface is positioned against the ground following a rollover event.

10. The method as claimed in claim 8, further comprising installing the indicators (84, 86) as visual indicators (92, 94, 96) that are visible to the occupants of the vehicle.

11. The method as claimed in claim 10, further comprising installing the visual indicators (92, 94, 96) as color coded LEDs (94, 96).

12. The method as claimed in claim 11, further comprising selecting the color coded LEDs(94, 96) to comprise green LEDs (94) and amber LEDs (96) that are night vision goggle compliant.

13. The method as claimed in claim 8, further comprising installing the indicators as auditory indicators that are heard by the occupants of the vehicle.

14. The method as claimed in claim 8, further comprising installing submersion sensors (76) located external to the vehicle and operably coupling the moisture indicators to the controller (50) and programming the controller (50) to display the positive indication proximate least one third selected egress portal (88, 90) that is less or least likely to be submerged and the negative indication proximate at least one fourth selected egress portals (88, 90) that is more or most likely to be submerged.
